# EUROPEAN PATENT APPLICATION

(11) **EP 3 725 541 A1**
(43) Date of publication of application: **21.10.2020**
(21) Application number: 20169985.7
(22) Date of filing: 16.04.2020
(51) Int. Cl.: B60C 3/06, B60C 11/00, B60C 15/02

(54) **REVERSIBLE PNEUMATIC TYRE PROVIDED WITH A DOUBLE TREAD**

(30) Priority: 17.04.2019 IT 201900005954
(71) Applicant: Bridgestone Europe NV/SA, 1932 Zaventem (BE)
(72) Inventor: MATTOCCI, Roberto, 00128 Roma (IT)
(74) Representative: Marchetti, Alessio

(57) **Abstract**

Reversible pneumatic tyre (1) having: a carcass (2), which consists of at least one body ply (3) partially folded onto itself; two annular beads (4), each of which is surrounded by the body ply (3); a first annular tread (7) arranged at a first surface of the body ply (3); a second annular tread (8) arranged at a second surface of the body ply (3) opposite the first surface; a pair of first sidewalls (13) arranged at the first surface of the body ply (3) between the first tread (7) and the beads (4); a pair of second sidewalls (14) arranged at the second surface of the body ply (3) between the second tread (8) and the heels (4); and a pair of abrasion gum strips (12), each of which surrounds a corresponding bead (4). The two beads (4) are arranged at respective radial distances, differentiated in such a way that between the two beads (4) there is a non-zero radial distance (D).

## Description

### TECHNICAL SECTOR

The present invention relates to a reversible pneumatic tyre with a double tread.

### PRIOR ART

The patent applications DE4209687A1, DE102010047492A1, FR1406806A, WO200609419A1 and EP1625949A1 describe a reversible pneumatic tyre (that can be turned inside-out) provided with a double tread. In essence, the reversible pneumatic tyre comprises two opposite faces both equipped with a tread and both therefore suitable for being arranged externally; consequently, the reversible pneumatic tyre can be turned inside-out in order to use a second tread when a first tread is worn or else it may be turned inside-out in order to use a first summer tread and a second winter tread.

In other words, the two treads of the same pneumatic tyre can be identical, to be used in succession (one after the other when the first tread is worn), or else they can be different, to be used at different times (typically having both a summer tread and a winter tread in the same pneumatic tyre).

Theoretically, a reversible pneumatic tyre (that can be turned inside-out), provided with a double tread has an operational lifetime that is double that of a standard pneumatic tyre at a slightly higher cost than the cost of a standard pneumatic tyre; in contrast, known reversible pneumatic tyres are of inferior performance compared to a conventional pneumatic tyre and for this reason have never been offered for sale.

The patent applications EP2979904A1 and EP2682286A1 describe a pneumatic tyre that is asymmetric in relation to a longitudinal plane (i.e., the right half is not identical to the left half), insofar as the two beads are arranged at respectively different radial dimensions in such a way that between the two beads these is a non-zero radial distance.

### DESCRIPTION OF THE INVENTION

The purpose of the present invention is to provide a reversible pneumatic tyre provided with a double tread wherein the performance thereof is equivalent to that of a conventional pneumatic tyre and that is, at the same time, easy and inexpensive to manufacture.

According to the present invention, a reversible pneumatic tyre equipped with a double tread is provided, as set forth in the appended claims.

The claims describe preferred embodiments of the present invention forming an integral part of the present description.

### BRIEF DESCRIPTION OF THE DRAWINGS

The present invention is now described with reference to the attached drawings, which illustrate several non-limiting exemplary embodiments, wherein:
- Figure 1 is a schematic cross section, with parts removed for clarity, of a reversible pneumatic tyre that does not form part of the present invention;
- Figures 2 and 3 are two schematic cross sections, with parts removed for clarity, of the reversible pneumatic tyre of Figure 1 mounted onto a rim, respectively, with a first tread facing outwards and with a second tread, opposite the first tread, facing outwards;
- Figure 4 is a schematic cross section, with parts removed for clarity, of a variant of the reversible pneumatic tyre of Figure 1 manufactured according to the present invention;
- Figures 5 and 6 are two schematic cross sections, with parts removed for clarity, of the reversible pneumatic tyre of Figure 4 mounted onto a rim according to two different embodiments;
- Figures 7 and 8 are two schematic cross sections, with parts removed for clarity of a vulcanization mold, respectively, in a closed configuration and in an open configuration for the vulcanization of the reversible pneumatic tyre of Figure 1; and
- Figures 9 and 10 are two schematic cross sections, with parts removed for clarity, of a further vulcanization mold, respectively, in a closed configuration and in an open configuration for the vulcanization of the reversible pneumatic tyre of Figure 1.

### PREFERRED EMBODIMENTS OF THE INVENTION

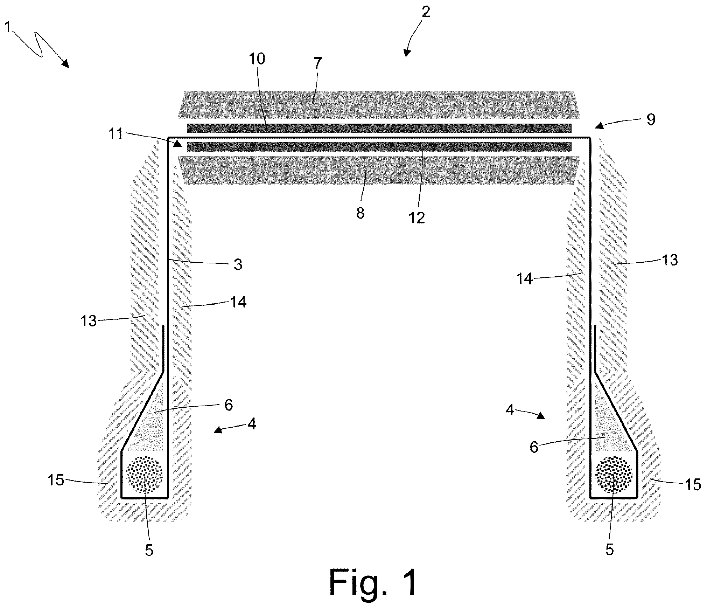

In Figure 1 a pneumatic tyre is indicated as a whole by the number 1 and comprises a toroidal carcass 2, consisting of a single body ply 3 partially folded onto itself and therefore having two lateral flaps (i.e., two layers superimposed on one another and jointly referred to as *"turn-up"*)*.* In each flap of the body ply 3, an edge (that is, a terminal end) of the body ply 3 rests against an intermediate portion of the body ply itself. According to a different embodiment, the toroidal carcass 2 consists of two or three body plies 3 partially overlapping therebetween. For example, the carcass 2 could comprise the body ply 3 (main) that forms the two flaps around the two beads 4 and an additional body ply (secondary or additional) that is smaller than the body ply 3, is superimposed onto the body ply 3, and wounds around the two beads 4 without, however, forming complete flaps as the body ply 3.

It is important to set forth that the body ply 3 could be provided with local reinforcing elements, which are applied to limited portions of the body ply 3; for example, the body ply 3 could be provided with a fabric reinforcement, which is applied in proximity to the beads 4, and/or with a calendered *"squeegee",* which is also applied close to the beads 4.

On the opposite sides of the carcass 2, two annular beads 4 are arranged, each of which is surrounded by the body ply 3 (i.e., it is surrounded by the flaps of the body ply 3), and has a bead core 5 which is reinforced with a number of windings of a metallic wire or aramid fiber and a bead filler 6. In other words, the wire that reinforces each bead core 5 can be metallic (typically steel), or else it can consist of aramid fibers (i.e., a class of synthetic fibers with high tensile strength and heat resistance and obtained by means of the processing of aromatic polyamides). According to a different embodiment not shown, each bead 4 is devoid of the bead filler 6, i.e., only the bead core 5 is present within each bead 4 (lacking the bead filler 6).

The carcass 2 supports, on the one hand, an annular tread 7 and on the opposite side a further annular tread 8; in other words, the annular tread 7 is arranged (with the interposition of other elements described below) upon a surface of the body ply 3, whilst upon an opposite surface of the body ply 3 the annular tread 8 is arranged (with the interposition of other elements described below). In other words, the annular tread 7 is arranged at a first surface of the body ply 3 whilst the annular tread 8 is arranged at a second surface of the body ply 3 opposite the first surface. The two treads 7 and 8 can have the same design or may have more or less different designs; similarly, the two treads 7 and 8 may consist of the same compound or may consist of different compounds. As a result, the two treads 7 and 8 may be perfectly interchangeable therebetween or the tread 7 may be intended for summer use whilst the tread 7 may be intended for use in the winter.

A tread belt 9 is interposed between the carcass 2 and the tread 7, which comprises at least one tread ply 10; in particular, the tread ply 9 may comprise a single tread ply 10 or else several tread plies 10 overlapping therebetween. A tread belt 11 is interposed between the carcass 2 and the tread 8, which comprises at least one tread ply 12; in particular, the tread belt 9 may comprise a single tread ply 12 or else several tread plies 12 overlapping therebetween.

Each tread ply 10 or 12 comprises a number of cords (not shown), which are embedded within a rubber belt, are arranged alongside one another with a given pitch and form an angle of inclination that is determined in relation to an equatorial plane of the reversible pneumatic tyre 1.

The body ply 3 supports a pair of sidewalls 13 which are arranged between the tread 7 and the beads 4 and that are located on the same side (i.e., on the same face of the body ply 3) of the tread 7; furthermore, the body ply 3 supports a pair of sidewalls 14 which are arranged between the tread 8 and the beads 4 and are located on the same side (i.e., on the same face of the body ply 3) of the tread 8 (and therefore the sidewalls 14 are arranged on the opposite side of the body ply 3 in relation to the sidewalls 13).

Finally, the body ply 3 supports a pair of abrasion gum strips 15, wherein each thereof has a "U" shape, surrounds a corresponding bead 4, is arranged radially innermost to the sidewalls 13 and 14, and is arranged externally to the body ply 3 (i.e., covers the body ply 3 of the carcass itself).

According to a preferred embodiment, in each side of the reversible pneumatic tyre 1 the sidewall 13, the abrasion gum strip 15, and the sidewall 14 consist of a single co-extruded element; in other words, in each side of the reversible pneumatic tyre 1 the sidewall 13, the abrasion gum strip 15, and the sidewall 14 form, from the outset (i.e., from before the construction of the reversible pneumatic tyre 1), a single indivisible body that is produced by means of co-extrusion.

According to a preferred embodiment, the reversible pneumatic tyre 1 is completely devoid of an innerliner 10, that is impermeable to air and generally coupled to an inner surface of the body ply 3 (i.e., it is initially separate and independent from the body ply 3 and rests against the body ply 3 during the construction of the reversible pneumatic tyre 1). The function of the innerliner, i.e., retaining the air within the reversible pneumatic tyre 1 in order to preserve over time the inflation pressure of the reversible pneumatic tyre 1 itself, is performed in part (minor) by the body ply 3 whereto there may be added waterproofing additives, and in part (major) by the double layer, both of the tread (by virtue of the presence of the treads 7 and 8 on both faces of the body ply 3), and of the sidewalls (by virtue of the presence of the sidewalls 13 and 14 on both faces of the body ply 3).

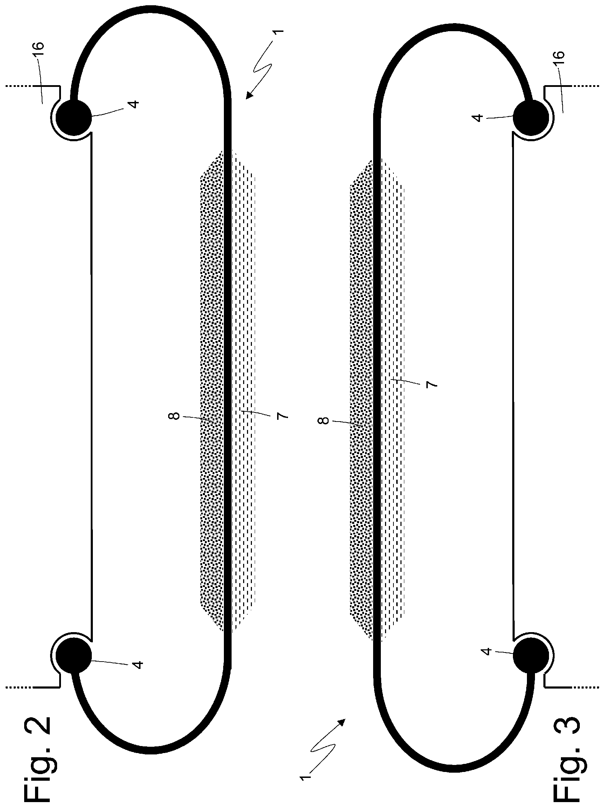

As shown in Figures 2 and 3, the reversible pneumatic tyre 1 can be turned inside-out, i.e., it can be mounted on a rim 16 with the tread 7 facing outwards (and thus in contact with the road surface) as shown in Figure 2, or else it can be turned outside-in (or inside-out), and therefore mounted onto the rim 16 with the tread 8 facing outwards (and thus in contact with the road surface) as shown in Figure 3. The assembly of the reversible pneumatic tyre 1 and the corresponding rim 16 constitutes a wheel. The reversible pneumatic tyre 1 can be turned inside-out in order to use the tread 8 when the tread 7 is worn, or else it can be turned inside-out in order to use the tread 7 in summer and the tread 8 in winter. In other words, the two treads 7 and 8 of the same reversible pneumatic tyre 1 can be identical to be used in succession (one after the other when the first tread is worn), or else they can be different to be used at different times (typically having both a summer tread 7 and a winter tread 8 in the same pneumatic tyre 1).

According to the embodiment shown in Figures 1, 2 or 3, the (which does not form part of the present invention) reversible pneumatic tyre 1 is symmetrical in relation to a longitudinal plane (i.e., the right half is identical to the left half) and therefore the two beads 4 are arranged at the same radial distance (i.e., between the two beads 4 there is a radial distance of zero).

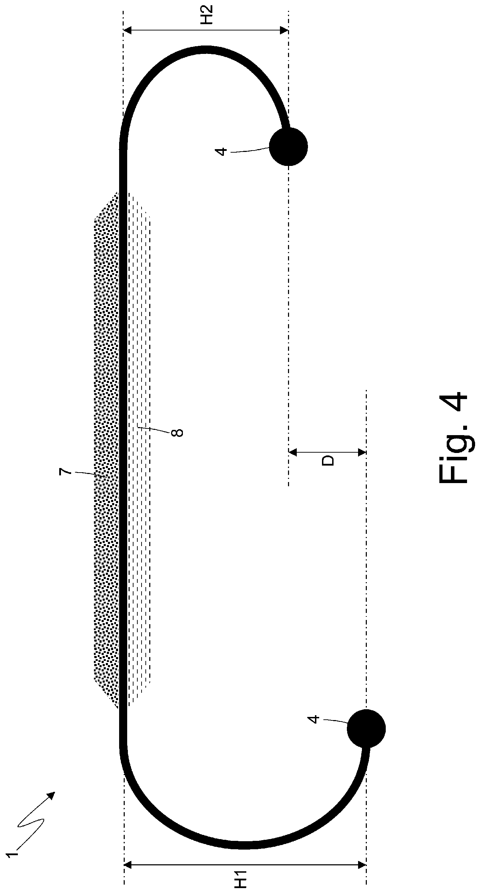

According to an alternative embodiment shown in Figures 4, 5 and 6 (which forms part of the present invention), the reversible pneumatic tyre 1 is asymmetric in relation to a longitudinal plane (i.e., the right half is not identical to the left half) insofar as the two beads 4 are arranged at respectively differing radial distances, in such a way that between the two beads 4 there is a non-zero radial distance D; accordingly, the sidewalls 13 and 14, on one side, are radially more extended than the sidewalls 13 and 14 of the other side. In other words, one side of the reversible pneumatic tyre 1 has a radial dimension H1 that is greater than a radial dimension H2 of the other side of the reversible pneumatic tyre 1.

An asymmetrical reversible pneumatic tyre 1 (i.e., wherein the two sides have differing radial dimensions H1 and H2) is (much) easier to turn inside-out, i.e., it is easier to turn inside-out in order to invert the tread 7 or 8 that is facing outwards.

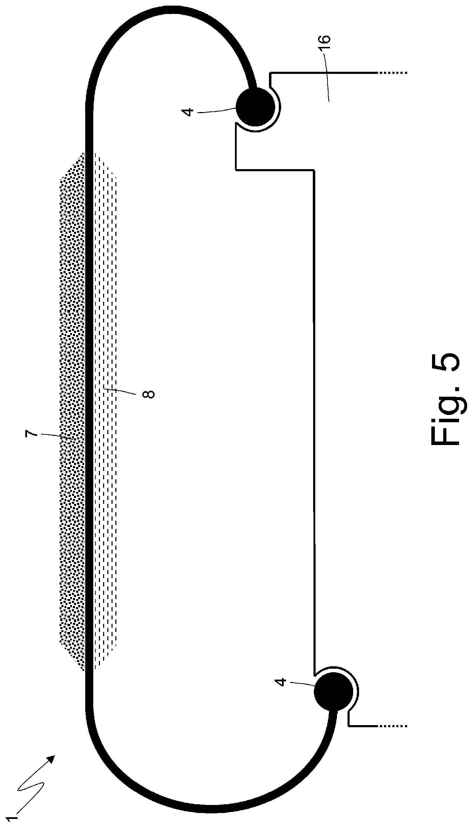

In the embodiment shown in Figure 5, the reversible pneumatic tyre 1 is mounted onto an asymmetrical rim 16, which comprises two annular sides having different diameters; in this embodiment, each bead 4 (enclosed by a corresponding abrasion gum strip 15) is in direct contact with a corresponding side of the rim 16.

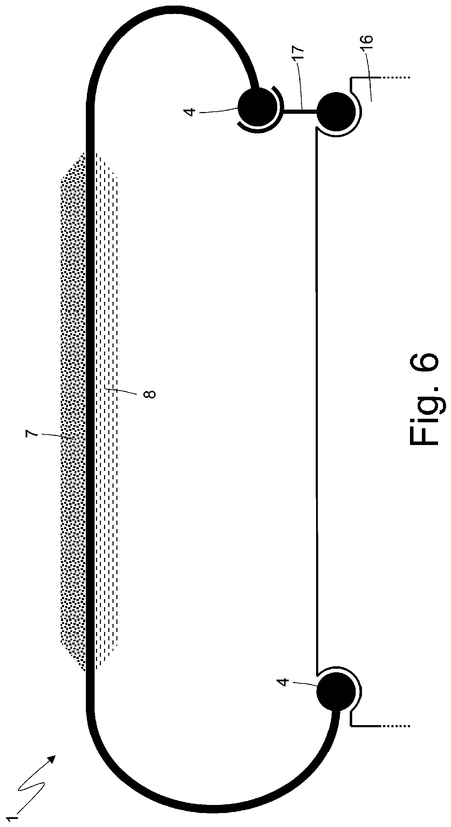

In the embodiment shown in Figure 6, the reversible pneumatic tyre 1 is mounted on a symmetrical rim 16, which comprises two annular sides having the same diameter; in this embodiment, a bead 4 (enclosed by a corresponding abrasion gum strip 15) is in direct contact with a corresponding side of the rim 16 whilst the other bead 4 (enclosed by a corresponding abrasion gum strip 15) is in indirect contact with a corresponding side of the rim 16 by means of the interposition of an annular connecting flange 17 (made of an elastomeric material) which is independent and separable both from the rim 16 and from the reversible pneumatic tyre 1. In other words, in order to mount the asymmetrical reversible pneumatic tyre 1 onto a symmetrical rim 16, the annular connecting flange 17 is used which compensates for the difference in diameter between the side of the rim 16 and the narrower bead 4. In the embodiment shown in Figure 6, the annular connecting flange 17 comprises, externally, a seat that is suitable for accommodating the bead 4 (i.e., reproducing in negative the shape of the bead 4) and internally it comprises a coupling element which engages with the side of the rim 16.

According to a possible embodiment, in at least one bead 4 of the reversible pneumatic tyre 1, the bead core 5 can be opened and has a connecting device that can be closed in order to confer an annular closed shape to the bead core 5, that is devoid of a beginning and an end, and that can be opened in order to confer an open shape to the bead core 5 having a beginning and an end; clearly, the bead core 5 normally (and especially when the reversible pneumatic tyre 1 is mounted on a rim 16) has a closed annular form, without a beginning and an end (i.e., with the connection device closed), and has the open shape having a beginning and an end (i.e., with the connecting device open) only during turning inside-out operations in order to invert the tread 7 or 8 that is facing outwards.

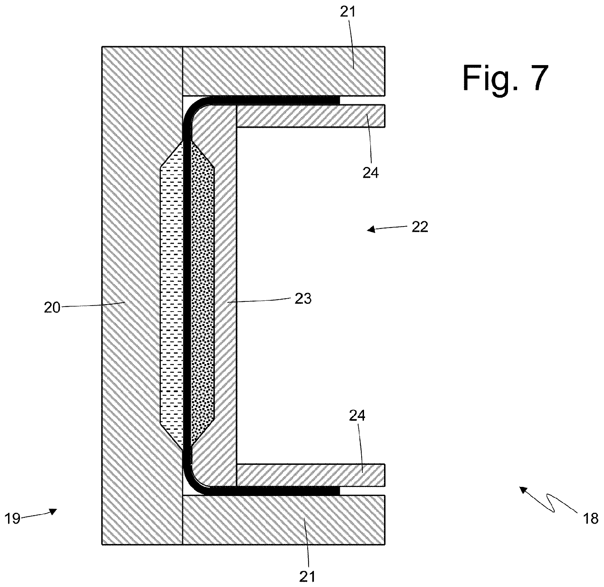

Described hereinafter are the methods for the production of the reversible pneumatic tyre 1, which initially require the construction of the reversible pneumatic tyre 1 by means of a standard construction drum (not shown) using green rubber elements and, subsequently, the vulcanization of the reversible pneumatic tyre 1 within a vulcanization mold 18 (partially shown in figures 7-10).

According to a possible construction method (referred to as *"TOS* - *Tread over Sidewall"*)*,* the tread 8 is initially wound around the construction drum; subsequently, the tread belt 11 is wound over the tread 8 whilst on the opposite sides of the tread 8 and around the construction drum, two co-extruded elements are wound, each formed from a sidewall 14, an abrasion gum strip 15, and a sidewall 13; the body ply 3 is then wound over the tread belt 11, over the side walls 14, over the abrasion gum strips 15, and partially over the sidewalls 13; the tread belt 9 is then wound over the body ply 3; and finally the tread 7 is wound over the tread belt 9. After having wound the body ply 3 onto the construction drum, the two beads 4 are arranged around the body ply 3. Once all of the components listed above are positioned around the construction drum, the so-called *"tip-turning"* is performed in order to implement the two flaps of the body ply 3 in such a way as to enclose the two beads 4.

According to an alternative construction method (referred to as *"SOT* - *Sidewall Over Tread"*)*,* two co-extruded elements are wound around the construction drum, each formed from a sidewall 14, an abrasion gum strip 15, and a sidewall 13; subsequently, firstly the tread 8 is wound around the construction drum and then the tread belt 11. Subsequently, the body ply 3 is wound around the construction drum above the belt 11, over the sidewalls 14, over the abrasion gum strips 15, and partially over the sidewalls 13; after having wound the body ply 3 onto the construction drum, the two beads 4 are arranged around the body ply 3. Once all of the components listed above are positioned around the construction drum, the so-called *"tip-turning"* is performed in order to implement the two flaps of the body ply 3 in such a way as to enclose the two beads 4. Finally, firstly the tread belt 9 is wound around the construction drum and over the body ply 3 and subsequently, the tread 7 is wound over the tread belt 9; eventually the flap of each sidewall 13 is completed.

At this point, the construction of the reversible pneumatic tyre 1 is complete and the reversible pneumatic tyre 1 is ready to be vulcanized within the vulcanization mold 18 (partially shown in Figures 7-10).

According to what is shown in Figures 7-10, the vulcanization mold 18 is suitable for vulcanizing the reversible pneumatic tyre 1 when the tread 7 is facing outwards, and therefore when the tread 8 is facing inwards.

The vulcanization mold 18 has a movable outer wall 19 consisting of a plurality of circular sectors 20 that are independent therebetween and that are suitable for coming to rest against the tread 7, and that reproduce the negative of the final design of the tread 7 itself, and two rings 21 which are suitable for resting against the sidewalls 13 and that reproduce the negative of the final design of the sidewalls 13 themselves; furthermore, the vulcanization mold 18 has an inner movable wall 22 consisting of a plurality of circular sectors 23 that are independent therebetween which are suitable to rest against the tread 8 and that reproduce the negative of the final design of the tread 8 itself, and of a plurality of circular sectors 24 that are independent therebetween which are suitable to rest against the sidewalls 14 and that reproduce the negative of the final design of the sidewalls 14 themselves. Consequently, the vulcanization mold 18 is used to reproduce the negative of the design of each outer side (by means of the two rings 21) and of each inner side (by means of the plurality of circular sectors 24).

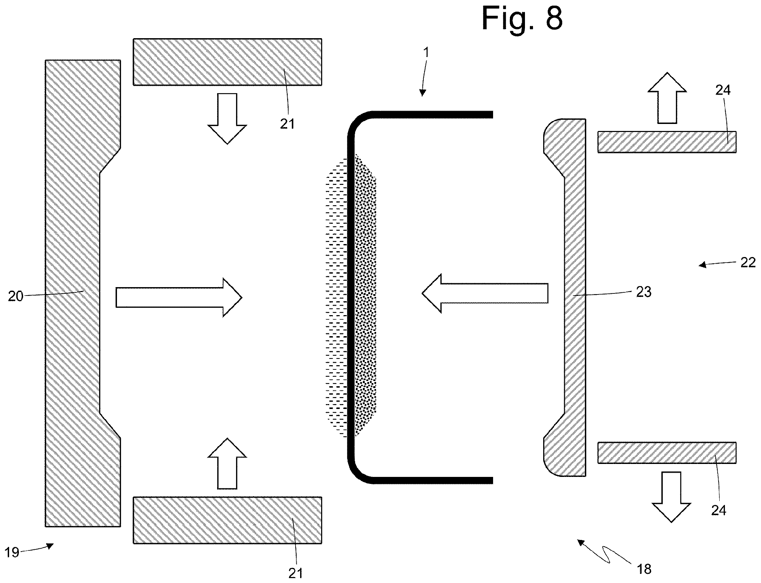

In the embodiment shown in Figures 7 and 8, the vulcanization mold 18 is suitable for containing the reversible pneumatic tyre 1 having a toroidal shape, wherein the tread 7 is arranged facing outwards, the tread 8 is arranged facing inwards, the sidewalls 13 are inclined in relation to the tread 7, and the sidewalls 14 are inclined in relation to the tread 8; in other words, the vulcanization mold 18 is suitable for containing the reversible pneumatic tyre 1 having the final form that the reversible pneumatic tyre 1 assumes when it is mounted onto the rim 16 in order to have the tread 7 facing outwards.

In the embodiment shown in Figures 7 and 8, the wall 19 of the vulcanization mold 18 is movable along a radial direction, has a "U" shape and embraces the tread 7 and the sidewalls 13 from the outside, whilst the wall 22 of the vulcanization mold 18 is movable along a radial direction, has a "U" shape, and embraces the tread 8 and the sidewalls 13 from the inside. In summary, the wall 19 of the vulcanization mold 18 consists a series of circular sectors 20 that define (mold) the tread 7, and two rings 21 that define (mold) the sidewalls 13; the wall 22 of the vulcanization mold 18 consists of a series of circular sectors 23 that define (mold) the tread 8 and a series of circular sectors 24 that define (mold) the sidewalls 14.

The vulcanization mold 18 shown in Figures 7 and 8 determines the formation of a preferential (main) tread consisting of the tread 7, and the formation of an alternative (secondary) tread consisting of the tread 8, insofar as the reversible pneumatic tyre 1 is vulcanized with the final form that the reversible pneumatic tyre 1 assumes when it is mounted onto the rim 16 in order to have the tread 7 facing outwards. Consequently, in order to have the tread 8 facing outwards, it is necessary to completely turn the reversible pneumatic tyre 1 inside-out in relation to the form assumed during vulcanization.

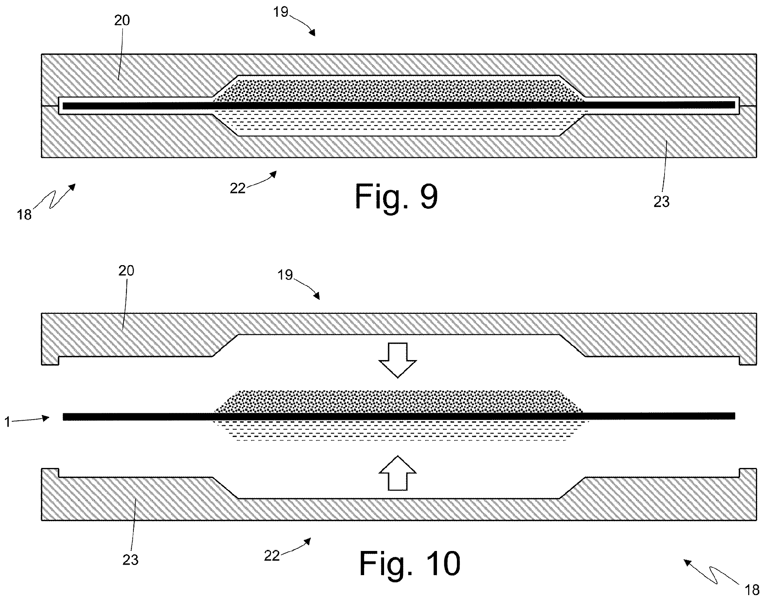

In the embodiment shown in Figures 9 and 10, the vulcanization mold 18 is suitable for containing the reversible pneumatic tyre 1 having a cylindrical shape (instead of a toroidal shape), wherein the tread 7 is arranged facing outwards, the tread 8 is arranged facing inwards, the sidewalls 13 are coplanar therebetween in relation to the tread 7, and the sidewalls 14 are coplanar therebetween in relation to the tread 8; in other words, the vulcanization mold 18 is suitable for containing the reversible pneumatic tyre 1 having a form that is different from that assumed when it is mounted onto the rim 16. In the embodiment shown in Figures 9 and 10, the wall 19 of the vulcanization mold 18 is movable along a radial direction, is flat and embraces the tread 7 and the sidewalls 13 from the outside, whilst the wall 20 of the vulcanization mold 18 is movable along a radial direction, is flat and embraces the tread 8 and the sidewalls 14 from the inside.

The vulcanization mold 18 shown in Figures 9 and 10 does not lead to the formation of a preferential (main) tread and an alternative (secondary) tread, insofar as the reversible pneumatic tyre 1 is vulcanized with the sidewalls 13 and 14 coplanar to the treads 7 and 8. Consequently, in order to arrange for both the tread 7 facing outwards and the tread 8 facing outwards it is necessary to fold the sidewalls 13 and 14 by approximately 90° in relation to the shape assumed during vulcanization.

In the embodiment shown in Figure 1, the body ply 3 is partially folded onto itself and therefore, laterally, has two flaps (i.e., two layers that are overlapping therebetween and commonly referred to as *"turn-up"*) that surround the respective beads 4; according to an alternative embodiment, not shown, the body ply 3 is not partially folded onto itself (two flaps are not therefore formed) and the two ends of the body ply 3 are attached (anchored) to the respective beads 4. In other words, each end of the body ply 3 can be coupled to a corresponding bead 4 thereby forming a flap that surrounds (encloses) the bead 4 or thereby being anchored to the bead 4.

According to a different embodiment, not shown, the reversible pneumatic tyre 1 described above may also be of the *"run-flat"* type.

The embodiments described herein may be combined without departing from the scope of protection of the present invention.

The reversible pneumatic tyre 1 described above has many advantages.

Firstly, the reversible pneumatic 1 described above has equivalent performance in relation to a similar conventional pneumatic tyre, whilst having almost double the useful life.

Furthermore, the turning inside-out of the reversible pneumatic tyre 1 is relatively quick and easy and can be performed by any tyre specialist without the need to use dedicated equipment (even though dedicated equipment can obviously simplify and accelerate the task).

As stated previously, by virtue of the asymmetrical shape (i.e., wherein the two sides have differing radial dimensions H1 and H2) the reversible pneumatic tyre 1 is (much) easier to turn inside-out, i.e., it is (much) easier to turn inside-out in order to invert the tread 7 or 8 that is facing outwards. In other words, the combination of the asymmetric conformation with the double tread 7 and 8 makes it possible to obtain a final result that is surprisingly optimal, insofar as to the traditional features of the asymmetric conformation there is added the remarkable (unexpected) ease reversal, which is entirely useless in a standard single tread pneumatic tyre, but that is instead essential in a reversible pneumatic tyre the double tread 7 and 8.

Finally, the construction of the reversible pneumatic tyre 1 described above is simple and economical and requires the use of an entirely conventional construction drum.

### LIST OF REFERENCE NUMBERS IN THE FIGURES

- 1: pneumatic tyre
- 2: carcass
- 3: body ply
- 4: beads
- 5: bead core
- 6: bead filler
- 7: tread
- 8: tread
- 9: tread belt
- 10: tread plies
- 11: tread belt
- 12: tread plies
- 13: sidewalls
- 14: sidewalls
- 15: abrasion gum strips
- 16: rim
- 17: connecting flange
- 18: vulcanization mold
- 19: wall
- 20: circular sectors
- 21: rings
- 22: wall
- 23: circular sectors
- 24: circular sectors
- D: radial distance
- H1: radial dimension
- H2: radial dimension

## Claims

1. Reversible pneumatic tyre (1) comprising:
a carcass (2), which consists of at least one body ply (3) ;
two annular beads (4), each of which is coupled to the body ply (3) and has a bead core (5);
a first annular tread (7) arranged at a first surface of the body ply (3);
a second annular tread (8) arranged at a second surface of the body ply (3) opposite the first surface;
a pair of first sidewalls (13) arranged at the first surface of the body ply (3) between the first tread (7) and the beads (4);
a pair of second sidewalls (14) arranged at the second surface of the body ply (3) between the second tread (8) and the beads (4); and
a pair of abrasion gum strips (12), each of which has a "U" shape, surrounds a corresponding bead (4), is arranged radially innermost to the sidewalls (13, 14), and is arranged externally to the body ply (3);
the reversible pneumatic tyre (1) is **characterized in that** the two beads (4) are arranged at respective radial distances, differentiated in such a way that between the two beads (4) there is a non-zero radial distance (D).

2. Reversible pneumatic tyre (1) according to claim 1, wherein a side has a radial dimension (H1) that is greater than a radial dimension (H2) of the other side.

3. Reversible pneumatic tyre (1) according to claim 1 or 2 and comprising:
a first tread belt (9), which comprises at least one first tread ply (10) that is interposed between the body ply (3) and the first tread (7); and
a second tread belt (11), that is separate and independent from the first tread belt (9) and comprises at least one second tread ply (12) that is interposed between the body ply (3) and the second tread (8).

4. Reversible pneumatic tyre (1) according to claim 1, 2 or 3, which does not provide for an innerliner that is impermeable to air and that is initially separate and independent from the body ply (3).

5. Reversible pneumatic tyre (1) according to one of the claims from 1 to 4, wherein in each side the first sidewall (13), the abrasion gum strip (15), and the second sidewall (14) constitute a single co-extruded element.

6. Reversible pneumatic tyre (1) according to one of the claims from 1 to 5, wherein in at least one bead (4) the bead core (5) can be opened and has a connecting device that can be closed in order to confer to the bead core (5) a closed annular shape, without a beginning and an end, and that can be opened in order to confer to the bead core (5) an open shape having a beginning and an end.

7. Wheel comprising:
an asymmetrical rim (16), which comprises two annular sides having different diameters; and
a pneumatic tyre according to one of the claims from 1 to 6 and mounted onto the rim (16).

8. Wheel according to claim 7, wherein each bead (4) wound around by a corresponding abrasion gum strip (15) is in direct contact with a corresponding side of the rim (16).

9. Wheel comprising:
a symmetrical rim (16), which comprises two annular sides having the same diameter; and
a pneumatic tyre according to any one of the claims from 1 to 6 and mounted onto the rim (16).

10. Wheel according to claim 9, wherein:
a first bead (4) wound around by a corresponding abrasion gum strip (15) is in direct contact with a corresponding side of the rim (16); and
a second bead (4) wound around by a corresponding abrasion gum strip (15) is in indirect contact with a corresponding side of the rim (16) by means of the interposition of an annular connecting flange (17) that is independent and separable from both the rim (16) and from the reversible pneumatic tyre (1).

11. Wheel according to claim 10, wherein the annular connecting flange (17) is made of elastomeric material.
